# EUROPÄISCHE PATENTSCHRIFT

(11) **EP 2 253 878 B1**
(45) Veröffentlichungstag und Bekanntmachung des Hinweises auf die Patenterteilung: **19.10.2011**
(21) Anmeldenummer: 09305446.8
(22) Anmeldetag: 18.05.2009
(51) Int. Cl.: F16L 59/14

(54) **Flexible Rohrleitung**
Flexible conduit
Conduite flexible

(43) Veröffentlichungstag der Anmeldung: 24.11.2010
(73) Patentinhaber: Nexans, 75008 Paris (FR)
(72) Erfinder: Dipl.-Ing. Schippl, Klaus, 30659, Hannover (DE); Dipl.-Ing. Lehmann, Holger, 31832, Springe (DE)
(74) Vertreter: Döring, Roger

(56) Entgegenhaltungen:
- EP-A2- 1 344 971
- US-A- 4 303 105
- US-A1- 2004 216 795

## Beschreibung

### Beschreibung

Die Erfindung betrifft eine flexible Rohrleitung zum Transport eines tiefgekühlten Mediums, bestehend aus einem quer zu seiner Längsrichtung gewellten metallischen Führungsrohr zum Durchleiten des tiefgekühlten Mediums und aus einem dasselbe mit Abstand umgebenden und koaxial zu demselben angeordneten, ebenfalls quer zu seiner Längsrichtung gewellten metallischen Begrenzungsrohr, bei welcher zwischen Führungsrohr und Begrenzungsrohr eine Vakuumisolierung angebracht ist (EP 1 344 971 B1).

Eine derartige Rohrleitung wird beispielsweise zur Versorgung von supraleitfähigen Magnetsystemen oder Kryopumpen mit einem Kühlmedium benötigt. Sie soll flexibel sein und gegebenenfalls auch eine größere Länge haben. Zur Überbrückung derselben muß das Kühlmedium mit erhöhtem Druck in dem Führungsrohr transportiert werden. Das kann leicht zu einer Verformung des Führungsrohrs bzw. zu einer Auslenkung desselben aus seiner zentrischen Lage führen. Der Transport des Kühlmediums wäre dadurch gestört und die Wirkung der Vakuumisolierung wäre verschlechtert.

Der Erfindung liegt die Aufgabe zugrunde, die eingangs geschilderte Rohrleitung so zu gestalten, daß die zentrische Lage des Führungsrohrs auch bei erhöhtem Druck gehalten bleibt.

Diese Aufgabe wird gemäß der Erfindung dadurch gelöst,
- daß zwischen Führungsrohr und Begrenzungsrohr ein zweites, von der Vakuumisolierung umgebenes Rohrsystem zum Transport eines zweiten gekühlten Mediums angeordnet ist, das aus einem inneren, quer zu seiner Längsrichtung gewellten metallischen Rohr und einem mit Abstand und koaxial zu demselben angeordneten äußeren, ebenfalls quer zu seiner Längsrichtung gewellten Rohr besteht,
- daß das innere Rohr des zweiten Rohrsystems räumlich dicht am Führungsrohr der Rohrleitung angeordnet ist und
- daß zwischen dem Führungsrohr der Rohrleitung und dem inneren Rohr des zweiten Rohrsystems eine das Führungsrohr in seiner relativen Lage zum inneren Rohr unverrückbar haltende Abstandshalterung aus Isoliermaterial angeordnet ist.

Bei dieser Rohrleitung ist das Führungsrohr durch das innere Rohr des zweiten Rohrsystems so stabilisiert und gehalten, daß es auch dann, wenn das tiefgekühlte Medium mit hohem Druck durch dasselbe geleitet wird, nicht oder nur ganz geringfügig aus seiner zentrischen Lage ausgelenkt werden kann. Durch seine räumliche Nähe zum Führungsrohr und die stabile Abstandshalterung wirkt das innere Rohr des zweiten Rohrsystems quasi wie eine Bandage für das Führungsrohr. Vorteilhaft ist auch der Hohlraum des zweiten Rohrsystems, durch welchen ein weiteres gekühltes Medium geleitet werden kann. Durch dieses andere gekühlte Medium wird die Wirkung der über dem Führungsrohr befindlichen thermischen Isolierung insgesamt verbessert. Die thermischen Verluste des im Führungsrohr geführten tiefgekühlten Mediums sind auf diese Weise wesentlich vermindert.

Ausführungsbeispiele des Erfindungsgegenstandes sind in den Zeichnungen dargestellt.

Es zeigen:
Fig. 1 einen Abschnitt einer Rohrleitung nach der Erfindung im Schnitt.
Fig. 2 und 3 zwei unterschiedliche Ausführungsformen einer in der Rohrleitung verwendbaren Abstandshalterung.

In den Zeichnungen sind die jeweiligen gewellten Rohre der Einfachheit halber nur durch eine wellenförmig verlaufende Linie dargestellt.

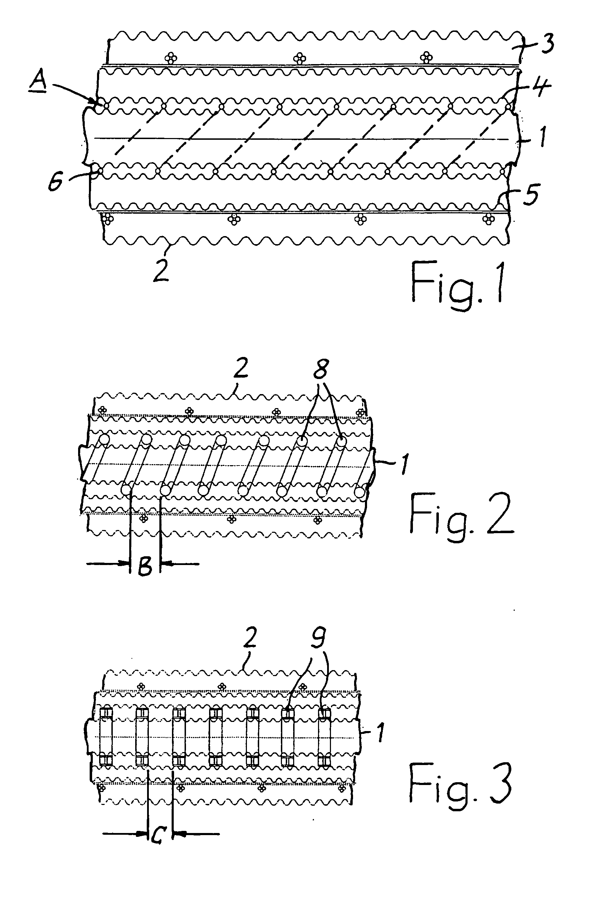

Die Rohrteitung, von welcher in Fig. 1 nur ein kurzer Abschnitt dargestellt ist, besteht aus einem zentralen Führungsrohr 1 und einem dasselbe mit Abstand koaxial umgebenden äußeren Begrenzungsrohr 2. Beide Rohre 1 und 2 sind quer zu ihrer Längsrichtung gewellt. Sie bestehen mit Vorteil aus Edelstahl. Zwischen Führungsrohr 1 und Begrenzungsrohr 2 ist eine an sich bekannte Vakuumsisolierung 3 als thermische Isolierung des Führungsrohrs 1 angebracht. Sie ist durch zwei achsparallel verlaufende Linien und aus jeweils vier Kreisen bestehende Abstandselemente gekennzeichnet. Das Führungsrohr 1 dient mit Vorteil zum Transport von flüssigem Helium, das mit einer Temperatur von etwa 4,5 K in das Führungsrohr 1 eingespeist wird. Das Führungsrohr 1 soll vorzugsweise für hohe Betriebsdrücke von bis zu 30 bar ausgelegt sein.

Im Ringraum zwischen Führungsrohr 1 und Begrenzungsrohr 2 und damit innerhalb der Vakuumisölierung 4 ist ein zweites Rohrsystem konzentrisch zum Führungsrohr 1 angeordnet, das aus einem inneren Rohr 4 und aus einem dasselbe mit Abstand koaxial umgebenden äußeren Rohr 5 besteht. Beide Rohres 4 und 5 sind ebenfalls quer zu ihrer Längsrichtung gewellt. Sie werden durch eine nicht mit eingezeichnete, materialarme und in axialer Richtung für Gas und Flüssigkeit gut durchlässige Abstandshalterung koaxial zueinander gehalten. Auch die Rohre 4 und 5 bestehen mit Vorteil aus Edelstahl. In das zweite Rohrsystem werden in den ringförmigen Hohlraum zwischen innerem Rohr 4 und äußerem Rohr 5 mit Vorteil gasförmiges Helium oder flüssiger Stickstoff bei einer Temperatur von etwa 80 K und unter einem Druck von etwa 5 bar eingespeist.

Das innere Rohr 4 des zweiten Rohrsystems liegt nahe am Führungsrohr 1 ohne dasselbe zu berühren. Es ist vom Führungsrohr 1 nur durch eine in radialer Richtung begrenzte, aus Isolierungsmaterial bestehende formstabile Abstandshaltung A getrennt. Die Abstandshalterung A ist in Fig. 1 durch Kreise 6 angedeutet. Damit soll ein wendelförmig verlaufender Strang angedeutet sein, der entsprechend den in Fig. 1 gestrichelt eingezeichneten Linien 7 um das Führungsrohr 1 herumgewickelt ist. Ein entsprechender wendelförmig verlaufender Strang 8 aus Isoliermaterial geht auch aus Fig. 2 hervor. Der Strang 8 besteht beispielsweise und mit Vorteil aus Polytetrafluorethylen. Er ist mit einer kurzen Steigung bzw. Schlaglänge um das Führungsrohr herumgewickelt. Der Abstand B zwischen den Windungen des Stranges 8 hängt vom Durchmesser D des Führungsrohrs 1 ab. Er kann vorzugsweise zwischen 1 x D und 10 x D liegen. Der radiale Abstand zwischen Führungsrohr 1 und innerem Rohr 4 hängt ebenfalls vom Durchmesser des Führungsrohrs 1 und wesentlich auch vom Aufbau der Abstandshalterung A ab. Er liegt mit Vorteil zwischen 2 mm und 5 mm, damit die stabilisierende Bandagenwirkung des inneren Rohres 4 für das Führungsrohr 1 erreicht wird.

Die Abstandshalterung A kann gemäß Fig. 3 auch aus Ringen 9 aus Isoliermaterial bestehen, die mit geringem axialem Abstand voneinander auf das Führungsrohr 1 aufgebracht sind. Die Ringe 9 bestehen vorzugsweise aus glasfaserverstärktem Kunststoff oder aus Polytetrafluorethylen. Auch hier hängt der Abstand C zwischen zwei Ringen 9 vom Durchmesser D des Führungsrohrs 1 ab. Er kann vorzugsweise ebenfalls zwischen 1 x D und 10 x D liegen.

Die Rohrleitung nach der Erfindung läßt sich mit Vorteil in einem einzigen Arbeitsgang herstellen. Dazu werden die einzelnen quer zu ihrer Längsrichtung gewellten Rohre in bekannter Technik aus einem Metallband zu einem Schlitzrohr mit einem in Längsrichtung verlaufenden Schlitz geformt, der anschließend verschweißt wird. Abschließend wird die Wellung in das jeweilige durch den Schweißvorgang rundum geschlossene Rohr eingedrückt.

In diesem Sinne wird zunächst das Führungsrohr 1 hergestellt, auf welches die Abstandshalterung A aufgebracht wird. Danach wird das innere Rohr 4 um das Führungsrohr 1 herumgeformt und gegebenenfalls nach dem Verschweißen in seinem Durchmesser so weit reduziert, daß es nach dem Wellvorgang an der Abstandshalterung anliegt. Auf das innere Rohr 4 wird anschließend die bereits erwähnte, materialarme und in axialer Richtung gut durchlässige Abstandshalterung aufgebracht, um welche das äußere Rohr 5 herumgeformt wird. Um das äußere Rohr 5 wird dann Material einer thermischen Isolierung herum angeordnet, welche zur Vakuumsisolierung 3 gehört und als Auflage für das Begrenzungsrohr 2 dient, das abschließend um die Isolierung herumgeformt wird. Nach dem Anbringen der Rohrleitungsenden wird der Ringraum zwischen Führungsrohr 1 und Begrenzungsrohr 2 zum Erhalt der Vakuumsisolierung 3 evakuiert.

## Patentansprüche

1. Flexible Rohrleitung zum Transport eines tiefgekühlten Mediums, bestehend aus einem quer zu seiner Längsrichtung gewellten metallischen Führungsrohr zum Durchleiten des tiefgekühlten Mediums und aus einem dasselbe mit Abstand umgebenden und koaxial zu demselben angeordneten, ebenfalls quer zu seiner Längsrichtung gewellten metallischen Begrenzungsrohr, bei welcher zwischen Führungsrohr und Begrenzungsrohr eine Vakuumisolierung angebracht ist, **dadurch gekennzeichnet,**
- **daß** zwischen Führungsrohr (1) und Begrenzungsrohr (2) ein zweites von der Vakuumisolierung (3) umgebenes Rohrsystem zum Transport eines zweiten gekühlten Mediums angeordnet ist, das aus einem inneren, quer zu seiner Längsrichtung gewellten metallischen Rohr (4) und einem mit Abstand und koaxial zu demselben angeordneten äußeren, ebenfalls quer zu seiner Längsrichtung gewellten Rohr (5) besteht,
- **daß** das innere Rohr (4) des zweiten Rohrsystems räumlich dicht am Führungsrohr (1) der Rohrleitung angeordnet ist und
- **daß** zwischen dem Führungsrohr (1) der Rohrleitung und dem inneren Rohr (4) des zweiten Rohrsystems eine das Führungsrohr (1) in seiner relativen Lage zum inneren Rohr (4) unverrückbar haltende Abstandshalterung (A) aus Isoliermaterial angeordnet ist.

2. Rohrleitung nach Anspruch 1, **dadurch gekennzeichnet, daß** die Abstandshalterung (A) aus einer mit kurzer Schlaglänge um das Führungsrohr (1) herumgewickelten Wendel (8) besteht.

3. Rohrleitung nach Anspruch 1, **dadurch gekennzeichnet, daß** die Abstandshalterung (A) aus einer Vielzahl von Ringen (9) besteht, die mit geringem axialen Abstand voneinander zwischen Führungsrohr (1) und innerem Rohr (4) angeordnet sind.

4. Rohrleitung nach Anspruch 2 oder 3, **dadurch gekennzeichnet, daß** der Abstand der Windungen der Wendel (8) bzw. der Ringe (9) voneinander zwischen 1 x D und 10 x D liegt, mit dem Durchmesser D des Führungsrohrs (1).

## Claims

1. A flexible pipe for the transport of a deep freezed medium, comprising a corrugated metallic guiding tube for guiding the deep freezed medium and a corrugated metallic limiting tube which is arranged coaxially and with a distance to the guiding tube with a vacuum insulation being provided between guiding tube and limiting tube, **characterized in**
- **that** between the guiding tube (1) and the limiting tube (2) a second tube system for the transport of a second cooling medium is positioned, which is surrounded by the vacuum insulation (3), consisting of an inner metallic corrugated tube (4) and an outer corrugated tube (5) which is arranged coaxially and with a distance to the same,
- **that** the inner tube (4) of the second tube system lies close to the guiding tube (1) of the pipe and
- **that** between the guiding tube (1) of the pipe and the inner tube (4) of the second tube system a mechanically stable spacer arrangement (A) of insulating material is provided which fixes the guiding tube (1) immovably in its position relative to the inner tube (4).

2. Pipe according to claim 1, **characterized in that** the spacer arrangement (A) consists of a helix (8) which is wound around the guiding tube (1) with a short length of lay.

3. Pipe according to claim 1, **characterized in that** the spacer arrangement (A) consists of a plurality of rings (9) which are mounted between the guiding tube (1) and the inner tube (4) with a short distance between them.

4. Pipe according to claim 2 or 3, **characterized in that** the distance of the windings of the helix (8) or of the rings (9) from each other lies between 1 x D and 10 x D, with the diameter D of the guiding tube (1).

## Revendications

1. Conduite tubulaire flexible pour le transport d'un fluide cryogénique, constituée d'un tube de guidage métallique ondulé transversalement à sa direction longitudinale, pour guider le fluide cryogénique, et d'un tube de limitation entourant celui-ci à distance, et disposé coaxialement à celui-ci, également ondulé transversalement à sa direction longitudinale, une isolation sous vide étant réalisée entre le tube de guidage et le tube de limitation,
**caractérisée en ce que**
- un deuxième système tubulaire entouré par l'isolation sous vide (3) pour le transport d'un deuxième fluide refroidi est disposé entre le tube de guidage (1) et le tube de limitation (2), lequel se compose d'un tube métallique interne (4) ondulé transversalement à sa direction longitudinale, et d'un tube externe (5) disposé à distance et coaxialement à celui-ci, également ondulé transversalement à sa direction longitudinale,
- le tube interne (4) du deuxième système tubulaire est disposé spatialement étroitement contre le tube de guidage (1) de la conduite tubulaire et
- entre le tube de guidage (1) de la conduite tubulaire et le tube interne (4) du deuxième système tubulaire est disposé un élément d'espacement (A) en matériau isolant maintenant le tube de guidage (1) de manière immobile dans sa position relative par rapport au tube interne (4).

2. Conduite tubulaire selon la revendication 1, **caractérisée en ce que** l'élément d'espacement (A) se compose d'une hélice (8) enroulée autour du tube de guidage (1) avec une courte longueur de pas.

3. Conduite tubulaire selon la revendication 1, **caractérisée en ce que** l'élément d'espacement (A) se compose d'une pluralité de bagues (9) qui sont disposées à une faible distance axiale les unes des autres entre le tube de guidage (1) et le tube interne (4).

4. Conduite tubulaire selon la revendication 2 ou 3, **caractérisée en ce que** la distance mutuelle entre les enroulements de l'hélice (8) ou entre les bagues (9) est comprise entre 1 × D et 10 × D, D étant le diamètre du tube de guidage (1).
